# EUROPEAN PATENT SPECIFICATION

(11) **EP 2 407 140 B1**
(45) Date of publication and mention of the grant of the patent: **03.05.2017**
(21) Application number: 10750742.8
(22) Date of filing: 04.03.2010
(51) Int. Cl.: A61J 1/05, C08L 23/12, C08L 53/02

(54) **ELASTOMER COMPOSITION FOR MEDICAL CONTAINER STOPPER**
ELASTOMERZUSAMMENSETZUNG FÜR DEN VERSCHLUSS EINES MEDIZINISCHEN BEHÄLTERS
COMPOSITION ÉLASTOMÈRE POUR BOUCHON DE CONTENANT MÉDICAL

(30) Priority: 13.03.2009 JP 2009061603
(43) Date of publication of application: 18.01.2012
(73) Proprietor: Aronkasei Co., Ltd., Tokyo 141-0022 (JP)
(72) Inventor: DATE Noriaki, Tokai-shi Aichi 476-0005 (JP)
(74) Representative: Vossius & Partner Patentanwälte Rechtsanwälte mbB
(86) International application number: PCT/JP2010/053522
(87) International publication number: WO 2010/103988

(56) References cited:
- EP-A1- 0 918 070
- JP-A- 61 247 460
- JP-A- 2003 026 898
- JP-A- 2004 204 180
- US-A1- 2004 039 128
- US-A1- 2007 066 753

## Description

### FIELD OF THE INVENTION

The present invention relates to an elastomer composite suitable to be used as the material for the plug of a medical vessel such as a bag for infusion fluid. Said elastomer composite contains block copolymers, a propylene polymer and a softening agent in a predetermined ratio. A molded article using said elastomer composite of the present invention has excellent properties as the plug for a medical vessel.

### BACKGROUND OF THE INVENTION

Some elastomer composites analogous to said elastomer composite of the present invention are known (Patent Literature 1 to 5). The Literature on these Patents also discloses that molded articles of said elastomer composites can be used for the plug of a medical vessel.

### Prior Technological Literature

### Patent Literature

Patent Literature 1: Tokkai-Sho 61-037242
Patent Literature 2: Tokkai-Hei 07-228749
Patent Literature 3: Tokkai-Hei 09-173417
Patent Literature 4: Tokkai 2002-143270
Patent Literature 5: Tokkai 2007-050138

Furthermore, JP 61-247460 A discloses a plug for an injection solution vessel which is wholly or partially composed of a thermoplastic elastomer composite comprising a hydrogenated copolymer, a mixture of polyisobutylene and/or polybutene and a paraffin softening agent and an olefin group resin. JP 2004-204180 A provides a thermoplastic elastomer composition containing an isobutylene-based block copolymer and an isobutylene-based polymer. JP 2003-026898 discloses a thermoplastic elastomer composition comprising an isobutylene block copolymer and a modified isobutylene block copolymer. US 2004/0039128 A1 relates to a hydrogenated copolymer obtained by hydrogenating a copolymer comprising conjugated diene monomer units and vinyl aromatic monomer units. US 2007/0066753 A1 provides a polymeric compound disclosed as comprising a conventional block copolymer and a controlled distribution block copolymer. EP 0918070 A1 discloses an elastomer composition comprising a hydrogenated block copolymer and a polypropylene resin.

### SUMMARY OF THE INVENTION

### PROBLEMS TO BE SOLVED BY THE INVENTION

A molded article obtained using said composites disclosed in said Patent Literature does not sufficiently satisfy all qualities requested of the plug of a medical vessel, said qualities being such as heat resistance (without any deformation through high pressure steam sterilization), liquid leakage resistance (no leaking or oozing of liquid from the part into/from which the needle is inserted/pulled, under various conditions to insert/pull the needle into/from said part), and a needle holding property (preventing the needle from coming out of the plug under the prescribed load), making usable conditions, under which said molded article as the plug of a medical vessel is used, limited.

The object of the present invention is to provide a molded article having excellent heat resistance, liquid leakage resistance and needle holding property.

### MEANS TO SOLVE SAID PROBLEM

To solve the object, the present invention of claim 1 provides an elastomer composite comprising 100 parts by mass of a block copolymer mixture containing 50 to 95 parts by mass of a block copolymer A and 5 to 50 parts by mass of a block copolymer P, with the total of said block copolymer A and said block copolymer P being 100 parts by mass, 120 to 300 parts by mass of a softening agent having kinematic viscosity in the rage of between 50 and 500 cSt, at 40°C, 1 to 50 parts by mass of a propylene polymer C having a modulus in bending in the range of between 1000 and 3000MPa.

In said elastomer composite, said block copolymer A is a hydrogenated polymer of a block copolymer Z1 having a polymer block Y1, and two polymer blocks X1 each combining to both ends of said polymer block Y1, said polymer block Y1 containing a butadiene monomer unit as its main constitutional unit, and a ratio of 1, 2-bonding in said butadiene monomer unit being in the range of between 10 and 50%, with each polymer block X1 containing a styrene monomer unit as its main constitutional unit, the weight-average molecular weight of said block copolymer A being in the range of between 160,000 and 400,000, said block copolymer A being a block copolymer containing 20 to 50% by mass of a styrene monomer unit, and said block copolymer P is a hydrogenated polymer of a bock copolymer Z2 having a butadiene-styrene controlled distribution copolymer Y2, and two polystyrene block X2 each combining to both ends of said copolymer block Y2, with the weight average molecular weight of said block copolymer P being in the range of between 160,000 and 400,000, said block copolymer P being a block copolymer containing 40 to 70% by mass of a styrene monomer unit, and further, said butadiene-styrene controlled distribution copolymer block comprising more than two domains YB2 containing a butadiene monomer unit as its main constitutional unit, and at least one domain YS2 containing a styrene monomer unit as main constitutional unit, with both ends of said copolymer block Y2 being said domains YB2.

In said elastomer composite, said propylene copolymer C is preferably a polypropylene (claim 2).

Further, the A-hardness of said elastomer composite is preferably in the range of between 30 and 50, said A-hardness being measured according to JIS K 6253, the measuring time being set at one second (claim 3).

### EFFECT OF THE INVENTION

Said elastomer composite can be molded by a well-known method such as injection molding, extrusion molding, or press molding.

The resulting molded article using said elastomer composite of the present invention has excellent heat resistance, excellent liquid leakage resistance, and an excellent needle holding property, which are important qualities requested of the plug for a medical vessel.

### EMBODIMENT TO PRACTICE THE INVENTION

In the instant specification, in a case where the numerical value range is shown as 'the lower limit numerical value to the upper limit numerical value', said expression means 'the lower limit numerical value, or more, and the upper limit numerical value, or less'.

The molecular weight is represented by the polystyrene conversion measured by gel permeation chromatography (hereafter to be described as GPC). The weight average molecular weight may simply be written as Mw, and the number average molecular weight may simply be written as Mn.

Said composition of the present invention, will be described in order, block copolymer A, block copolymer P, softening agent B, and propylene polymer C which are all necessary components, and then the optional components.

Said block copolymer A is an important component to improve the heat resistance, liquid leakage resistance, and needle holding property, of the molded article obtained from said elastomer composite of the present invention.

Said block copolymer A is a hydrogenated polymer of a block copolymer Z1, the weight average molecular weight of said block copolymer A being in the range of between 160,000 and 400,000, said block copolymer A containing 20 to 50% by mass of a styrene monomer unit.

Said block copolymer Z1 has a polymer block Y1 and two polymer blocks X1, wherein said polymer block Y1 contains a butadiene monomer unit as its main constitutional unit, a ratio of 1,2-bonding in said butadiene monomer unit being in the range of between 10 and 50%, and both of said polymer blocks X1 combine to both ends of said polymer block Y1, each polymer block X1 containing a styrene monomer unit as its main constitutional unit.

As aforementioned, said polymer block X1 contains a styrene monomer unit as its main constitutional unit, and said polymer block X1 may also contain another vinyl monomer unit with the exception of a styrene monomer unit so far as the performance of said elastomer composite of the present invention is not spoiled. The ratio of said styrene monomer unit in the total monomer units composing said polymer block X1 is preferably 90% by mass or more, but more preferably 95% by mass or more. In a case where the ratio of said styrene monomer unit is insufficient, the resulting molded article will have inferior heat resistance.

As aforementioned, said polymer block Y1 contains a butadience monomer unit as its main constitutional unit. In a case where isoprene, or isoprene and butadiene is (are) used as the main constitutional unit, the resulting molded article will have inferior liquid leakage resistance, and in a case where main constitutional unit is isobutylene, the resulting molded article will have inferior heat resistance.

Said polymer block Y1 may contain another vinyl monomer unit with the exception of a butadiene monomer unit so far as the performance of said elastomer composite of the present invention is not spoiled. The ratio of said butadiene monomer unit in the total monomer units composing said polymer block Y1 is preferably 70% by mass or more, but more preferably 80% by mass or more, and most preferably 90% by mass or more. In a case where the ratio of said butadiene monomer unit is insufficient, the resulting elastomer composite will have insufficient rubber elasticity, and the resulting molded article will have inferior liquid leakage resistance.

The ratio of 1,2-bonding in said butadiene monomer unit as the main composition of said polymer block Y1 is in the range of between 10 and 50%, but preferably between 15 and 45%, and more preferably between 20 and 40%. In a case where the ratio of 1,2-bonding is surplus, the resulting molded article will have insufficient rubber elasticity, thus inferior liquid leakage resistance. In a case where the ratio of 1,2-bonding is insufficient, the resulting molded article will have poor compatibility with said propylene polymer C, thus inferior liquid leakage resistance.

Said block copolymer Z1 has two polymer blocks X1 as aforementioned, and one polymer block Y1 as aforementioned, and said polymer blocks X1 are each arranged at both ends of said polymer block Y1. Regarding the two polymer blocks X1 described above, they may be of the same polymer block as each other, or of the different polymer block from each other. In a case where the block copolymer has only one polymer block X1, the resulting molded article will have insufficient heat resistance.

Said block copolymer Z1 preferably contains 10 to 60% by mass of said polymer block X1, but more preferably 20 to 50% by mass of said polymer block X1 as its polymer block composition. In a case where the ratio of said polymer block X1 is insufficient, it is feared that the resulting molded article will have poor heat resistance, and in a case where the ratio of said polymer block X1 is excessive, the resulting elastomer composite will have poor rubber elasticity, leading to fears that the resulting molded article will have inferior liquid leakage resistance.

Said block copolymer A is a hydrogenated copolymer produced by the hydrogenation of said block copolymer Z1 to transform an unsaturated bond (originating from butadiene) to a saturated bond by a well-known method. The ratio of hydrogenation is preferable in the range of between 80% or more, but more preferably 90% or more. In a case where an unhydrogenated block copolymer or insufficiently hydrogenated block copolymer is used, it is feared that the resulting composite will have poor heat resistance. Said hydrogenation of said block copolymer Z1 should be carried out under the condition that the hydrogenation of its styrene monomer unit does not substantially occur.

Said block copolymer A is generally called SEBS in abbreviation. In the abbreviation SEBS, 'S' means said polymer block X1 containing a styrene monomer unit as its main constitutional unit, 'EB' means the polymer block containing the ethylene monomer unit (E), and butylene monomer unit (B) as its main constitutional unit, produced by the hydrogenation of said polymer block Y1 which contains a butadiene monomer unit as its main constitutional unit. That is to say, the abbreviation 'SEBS' originates from the modeled structure of the block copolymer 'S-EB-S', wherein said block copolymer has 'S' blocks (blocks containing a styrene monomer unit as their main constitutional unit) at both ends of the EB block (said block containing an ethylene monomer unit and butylene monomer unit as its main constitutional units).

In this specification, depending on the usual practice of a person skilled in the art, the constitutional unit '-CH₂-CH (C₂H₅)-' originating from the 1,2-butadiene monomer unit (a butadiene monomer unit produced by the 1,2-addition of 1,3-butadiene) is called a butylene unit, and its constitutional unit '-CH₂-CH₂-CH₂-CH₂-' originating from a 1,4-butadiene monomer unit (a butadiene monomer unit having been produced by a 1,4-addition of 1,3-butadiene) is called an ethylene unit (considered to be made of two ethylene units).

Block copolymers which are abbreviated as SEPS and SEEPS are also provided, nevertheless, said block copolymers are unsuitable as said block copolymer A of the present invention. The main constitutional unit of said polymer block Y1 in said block copolymer A is butadiene, while the corresponding main constitutional unit of SEPS is isoprene, and the corresponding main constitutional unit of SEEPS is isoprene and butadiene. As aforementioned, in a case where SEPS or SEEPS, having blocks whose main constitutional unit is isoprene, or isoprene and butadiene, is used instead of said block copolymer A, the resulting molded article will have inferior liquid leakage resistance, as discussed in the following.

In a case where said block copolymer A (SEBS) is used in the present invention, the block between the two S blocks is the EB block, while in the case of SEPS, the block between the two S blocks is the EP block, while in the case of SEEPS, the block between the two S blocks is the EEP block (since the butadiene in SEEPS is mainly 1,4-butadiene, said butadiene composes substantially only an ethylene unit, and not a butylene unit. The first E of EEP means the ethylene unit originating from said butadiene, and EP means the ethylene unit and propylene unit originating from said isoprene).

In said SEBS, it is surmised that the block between the two S blocks should be an EB block since an EB block between two S blocks has a very important function, in that it provides excellent liquid leakage resistance to said molded article made of said composite. That is to say, it is important that the block between the two S blocks, each S block containing a styrene monomer unit as its main constitutional unit, should contain both constitutional units '-CH₂-CH(C₂H₅)-' originating from the 1,2-butadiene monomer unit and the constitutional unit '-CH₂-CH₂-CH₂-CH₂-'originating from the 1,4-butadiene, as its main constitutional units.

Said block copolymer A contains 20 to 50% by mass of a styrene monomer unit as the basis of all constitutional monomer units. In a case where the styrene monomer unit contained is below 20% by mass, the resulting molded article will have poor heat resistance. In a case where said molded article has poor heat resistance, it is feared that said molded article may deform, for instance, during heating for sterilization. In a case where the styrene monomer unit contained is more than 50% by mass, the resulting composite will have poor rubber elasticity, and said molded article made of said composite will have inferior liquid leakage resistance.

The Mw of said block copolymer A is in the range of between 160,000 and 400,000, but preferably 200,000 and 350,000. In a case where the Mw is below 160,000, the resulting molded article will have poor heat resistance. In a case where the Mw is higher than 400,000, the resulting molded article will have poor liquid leakage resistance (according to the liquid leakage resistance test 2 using a metal medical needle attached to an injector, described as follows), limiting the use of said molded article.

Two or more kinds of said block copolymer A may be used together.

Said block copolymer P is an important component to improve the liquid leakage resistance and needle holding property of the resulting molded article made of said elastomer composite.

Said block copolymer P is hydrogenated block copolymer Z2 described as follows, with its weight average molecular weight being in the range of between 160,000 and 400,000, the ratio of said styrene monomer unit contained in said block copolymer Z2 being in the range of between 40 and 70% by mass.

Said block copolymer Z2 is a block copolymer having a butadiene-styrene controlled distribution copolymer block Y2 and two polystyrene blocks X2 each combining to both ends of said copolymer block Y2.

Said controlled distribution copolymer block means a copolymer block having domains in which the ratios of the plural number of monomer units composing said copolymer block are different from each other.

In said block copolymer Z2, said polystyrene blocks X2 combining to both ends of said copolymer block Y2 is a polymer block composed substantially of a styrene monomer unit.

The ratio of styrene monomer units in all monomer units composing said polystyrene block X2 is preferably 90% by mass or more, but more preferably 95% by mass or more.

Said butadiene-styrene controlled distribution copolymer block Y2, which is a component in said block copolymer Z2, is a butadiene-styrene copolymer block having two or more domains YB2 containing a butadiene monomer unit as its main constitutional unit, and one or more domain(s) YS2 containing a styrene monomer unit as its main constitutional unit, with both ends of said copolymer block Y2 being domains YB2.

Said domain YB2 contains a butadiene monomer unit as its main constitutional unit.

In a case where the main constitutional unit of said domain YB2 is isoprene, or isoprene and butadiene, the resulting molded article will have inferior liquid leakage resistance. Further, in a case where the main constitutional unit of said domain YB2 is isobutylene, the resulting molded article will have inferior heat resistance.

Said domain YB2 may contain a vinyl monomer unit with the exception of a butadiene unit so far as the performance of said elastomer composite of the present invention is not spoiled.

The ratio of said butadiene monomer unit in all monomer units composing said domain YB2 should be beyond 50% by mass, but preferably beyond 60% by mass, more preferably beyond 70% by mass, and most preferably beyond 80% by mass. In a case where the ratio of said butadiene monomer unit is below 50% by mass, the resulting elastomer composite will have poor rubber elasticity, and said molded article made of said elastomer composite will have inferior liquid leakage resistance. In a case where the vinyl monomer unit with the exception of a butadiene monomer unit is used, a styrene monomer unit is preferably selected.

Said domain YS2 contains a styrene monomer unit as its main constitutional unit. Said domain YS2 may contain a vinyl monomer unit with the exception of a styrene monomer unit so far as the performance of said elastomer composite of the present invention is not spoiled. The ratio of said styrene monomer unit in all monomer units composing said domain YS2 should be beyond 50% by mass, but preferably beyond 60% by mass, more preferably beyond 70% by mass, and most preferably beyond 80% by mass. In a case where the ratio of said styrene monomer unit is below 50% by mass, the resulting molded article will have inferior heat resistance. In a case where a vinyl monomer unit with the exception of a styrene monomer unit is used, a butadiene monomer unit is preferably selected.

Said domain YB2 may be a domain corresponding to a block.

Further, said domain YS2 may also be a domain corresponding to a block.

Regarding both said domain YB2 and said domain YS2, in a case where each domain can be regarded as a domain corresponding to a block, said butadiene-styrene controlled distribution copolymer block Y2 can itself be treated as a block copolymer.

Said block copolymer P is a hydrogenated block copolymer Z2, wherein said block copolymer Z2 is hydrogenated by the well-known method of transferring the unsaturated bond originating from the butadiene contained in said copolymer block Y2 to a saturated bond. The ratio of hydrogenation is preferably 80% or more, but more preferably 90% or more. In a case where non-hydrogenated block copolymer Z2 or insufficiently hydrogenated block copolymer Z2 is used, it is feared that the resulting elastomer composite will have insufficient heat resistance.

Said hydrogenation to said block copolymer Z2 is carried out under the condition that the hydrogenation of the styrene monomer unit does not substantially occur.

As aforementioned, the modeled structure of said block copolymer A is 'S-EB-S', while said block copolymer P includes a polymer having a modeled structure which is, for instance, 'S-EB-S-EB-S'.

Said block copolymer P is also included in the analogue of SEBS, however, in the instant specification, so as to distinguish said block copolymer P from said block copolymer A, said block copolymer A is represented as merely SEBS, while said block copolymer P is represented as a multiblock SEBS, for convenience.

Said block copolymer P contains 40 to 70% by mass of a styrene monomer unit based on all constitutional monomer units. In a case where the styrene monomer unit content in said block copolymer P is below 40% by mass, the resulting molded article will have an insufficient needle holding property, and poor heat resistance.

In a case where the styrene monomer unit content in said block copolymer P is beyond 70% by mass, the resulting elastomer composite will have poor rubber elasticity, and said molded article made of said elastomer composite will have inferior liquid leakage resistance.

The Mw of said block copolymer P is in the range of between 160,000 and 400,000, but preferably between 200,000 and 350,000. In the case of said block copolymer P having an Mw of below 160,000, the resulting molded article will have poor heat resistance. In a case where said molded article has poor heat resistance, it is feared that the resulting molded article will deform during heat treatment such as sterilization.

In the case of said block copolymer P having an Mw of beyond 400,000, the resulting molded article will have insufficient liquid leakage resistance (according to the liquid leakage resistance test 2 using a metal medical needle attached to an injector, described as follows), limiting the use of said molded article.

Two or more kinds of said block copolymer P may be used together.

In said elastomer composite of the present invention, said block copolymer A and said block copolymer P are each used in a ratio in the range of between 50 and 95 parts by mass, and 5 and 50 parts by mass, the total amount of both block copolymers being set to be 100 parts by mass.

In a case where said block copolymer A is contained in said elastomer composite in a ratio of below 50 parts by mass, (said block copolymer P is contained in a ratio of beyond 50 parts by mass), the resulting molded article will have insufficient liquid leakage resistance. In a case where said block copolymer A is contained in said elastomer composite in a ratio of beyond 95 parts by mass (said block copolymer P is contained in a ratio of below 5 parts by mass), the resulting molded article will have an insufficient needle holding property.

Said softening agent B is a component to improve the balance between the liquid leakage resistance and needle holding property of said molded article made of said elastomer composite of the present invention, also improving its moldability while providing fluidity to said elastomer composite, when melted by heating.

As said softening agent B, an oily compound, which is commonly added to the thermoplastic elastomer, can be used. Said softening agent B may be a mineral oil such as paraffin oil, naphthene oil, aromatic oil or the like. Further, a vinyl polymer having a low degree of polymerization, said vinyl polymer being liquid at room temperature (20°C), such as olefin polymer, diene compound polymer, acrylic polymer, or the like, can be used as said softening agent B. Said paraffin oil is preferably used as said softening agent B of the present invention.

The kinematic viscosity of said softening agent is in the range of between 50 and 500 cSt, at 40°C, but preferably 55 and 300 cSt, at 40°C. In a case where said softening agent has a kinematic viscosity of lower than 50 cSt, the resulting molded article will have insufficient liquid leakage resistance, and said softening agent is apt to bleed onto the surface of said molded article in which said softening agent is contained. In a case where said softening agent has a kinematic viscosity of higher than 500 cSt, it is feared that the resulting elastomer composite will have insufficient moldability, and that said molded article made of said elastomer composite will have insufficient liquid leakage resistance. Two or more kinds of said softening agent B may be used together.

Said propylene polymer C is a component to improve the balance between the liquid leakage resistance and needle holding property of said molded article of the present invention, as well as the modability of said elastomer composite of the present invention. Said propylene polymer C is a polymer containing a propylene monomer unit as its main constitutional unit, and said propylene polymer C may be a propylene homopolymer, or copolymer in which a radical polymerizable monomer with the exception of propylene is copolymerized to propylene in a ratio so far as the performance of the resulting molded article is not spoiled. In the case of copolymer, the ratio of said propylene monomer unit is preferably 70% by mass or more, but more preferably 80% by mass or more, and further preferably 90% by mass or more, however, the most preferable propylene polymer C is substantially a propylene homopolymer. In a case where the ratio of said propylene monomer unit is insufficient, the resulting molded article will have inferior liquid leakage resistance and an inferior needle holding property. Two or more kinds of said propylene polymer C may be used together.

The modulus in the bending of said propylene polymer C is in the range of between 1000 and 3000 MPa, but preferably 1100 and 2500 MPa, and more preferably 1200 and 2000 MPa. In a case where the moldulus in bending is below 1000 MPa, the resulting molded article will have inferior liquid leakage resistance and an inferior needle holding property. In a case where the modulus in bending is beyond 3000 MPa, the resulting molded article will have inferior liquid leakage resistance.

Said elastomer composite of the present invention contains 100 parts by mass of said block copolymer mixture containing 50 to 95 parts by mass of said block copolymer A, and 5 to 50 parts by mass of said block copolymer P, 120 to 300 parts by mass (but preferably 120 to 280 parts by mass, more preferably 140 to 250 parts by mass, and further preferably 150 to 230 parts by mass) of said softening agent B, and 1 to 50 parts by mass (but preferably 5 to 40 parts by mass, more preferably 10 to 30 parts by mass) of said propylene polymer C.

In a case where the ratio of said softening agent B is insufficient, the resulting elastomer composite will have poor moldability, and said molded article made of said elastomer composite will have insufficient liquid leakage resistance. In a case where the ratio of said softening agent B is excessive, the resulting molded article will have an inferior needle holding property, and its liquid leakage resistance is apt to be insufficient.

In a case where the ratio of said propylene polymer C is insufficient, the resulting elastomer composite will have poor moldability, and in a case where the ratio of said propylene polymer C is excessive, the resulting molded article will have insufficient liquid leakage resistance.

Said elastomer composite of the present invention may contain other optional components besides said essential components in a ratio so far as said optional components don't spoil the performance of said elastomer composite. Said optional components include components such as a thermoplastic resin, with the exception of said block copolymer A, said block copolymer P, and said propylene polymer C (hereafter said thermoplastic resin is to be described as other thermoplastic resin), filler, lubricant, antiblocking agent, or flame retardant, as well as additives to suppress the degeneration, or degradation of the main components of said elastomer composite, for example, anti-oxidant, heat stabilizer, light stabilizer, or ultraviolet absorber.

In a case where said optional components are combined, the combining ratio will be properly settled in the range where the performance of said elastomer composite and said molded article is not spoiled.

As other thermoplastic resin, a block copolymer with the exception of said block copolymer A and said block copolymer P, a propylene polymer with the exception of said propylene polymer C, polyethylene, ethylene-vinyl acetate copolymer, ethylene-α-olefin copolymer, acrylic polymer, polyurethane, polyester, polyether, or the like may be illustrated. In a case where said other thermoplastic resin is combined, the combining ratio of said other thermoplastic resin is, assuming the total mass of said block copolymer A and said block copolymer P to be 100 parts by mass, preferably 100 parts by mass or below, but more preferably 70 parts by mass or below, yet more preferably 40 parts by mass or below, further, more preferably 20 parts by mass or below, most preferably 15 parts by mass or below. In a case where the ratio of said other thermoplastic resin is excessive, it is feared that the heat resistance, liquid leakage resistance, and needle holding property of the resulting molded article will be altogether inferior.

Said elastomer composite may be obtained by mixing and/or kneading a mixture containing said components in a prescribed ratio by a well-known means.

For mixing, e.g. a Henschel mixer, ribbon blender, or V-shaped blender can be used.

For kneading, e.g. an extruder, mixing roll, kneader, Banbury mixer, or Brabender-plastograph can be used.

For instance, powdery or pelletal solid main raw materials (components A. P and C) are mixed in by stirring in a stirrer (dry blending), and then the liquid raw material (component B) is added to the resulting dry blend to mix by stirring, so as to impregnate components B into components A, P and C, and then if necessary, other raw material(s) is (are) added to the mixture and stirred to mix and obtain a combined powder. A preferable preparation method of said elastomer composite is one wherein said combined powder obtained is kneaded by an extruder to form pellets.

In said method, "other raw materials" may be mixed in said solid main raw materials (components A, P and C) in the beginning.

Next, the use of said elastomer composite is explained. The molding of said elastomer composite of the present invention can be carried out using a well-known molding machine such as injection molding machine, extruder, or press molding machine. Said molded article produced by molding said elastomer composite of the present invention has excellent important characteristics required for the plug of a medical vessel such as heat resistance, liquid leakage resistance and a needle holding property. Consequently, said molded article obtained by molding said elastomer composite of the present invention is suitable to be used for the plug of a medical vessel.

Said elastomer composite of the present invention preferably has an A hardness in the range of between 30 to 50, but more preferably 30 and 45, and most preferably 30 and 40. In a case where its A hardness is below 30, the resulting molded article will have an insufficient needle holding property. In a case where the A hardness is higher than 50, the resulting molded article will have insufficient liquid leakage resistance. The conditions for measuring an A hardness in the instant specification are described as follows.

### EXAMPLES

### (Raw materials)

Raw materials used in EXAMPLES are described as follows.

### 1, Block copolymer A and comparison block copolymer A'

- Block copolymer A1: G1651 (Kraton Performance Polymers Inc. made, Hydrogenated block copolymer SEBS, styrene monomer unit content: 33% by mass. Mw:290,000, Mn: 260,000, the ratio of 1,2-bonding in butadiene monomer unit: 37%).
- Block copolymer A2: SEPTON 8006 (KURARAY CO., LTD. made, Hydrogenerated block copolymer SEBS, styrene monomer unit content: 33% by mass. Mw: 280,000, Mn: 260,000, the ratio of 1.2-bonding in butadiene monomer unit: 36%).
- Comparison block copolymer A'1: G1650 (Kraton Performance Polymers Inc. made, Hydrogenated block copolymer SEBS. styrene monomer unit content: 29% by mass, Mw: 110,000, Mn: 100,000, the ratio of 1,2 bonding in butadiene monomer unit: 37%).
- Comparison block copolymer A'2: G1633 (Kraton Performance Polymers Inc. made, Hydrogenated block copolymer SEBS, styrene monomer unit content: 30% by mass, Mw: 450,000, Mn: 400,000, the ratio of 1,2-bondong in butadiene monomer nit: 37%).
- Comparison block copolymer A'3: SEPTON 4055 (KURARAY CO., LTD. made, Hydrogenated block copolymer SEEPS, styrene monomer unit content: 30% by mass, Mw: 300,000, Mn: 280,000, the ratio of 1,2-bonding in diene monomer unit: about 37%).
- Comparison block copolymer A'4: SEPTON 2006 (KURARAY CO., LTD. made, Hydrogenated block copolymer SEPS, styrene monomer unit content: 35% by mass, Mw:320,000, Mn: 290,000, the ratio of 1,2-bonding in dien monomer unit: about 37%),
- Comparison block copolymer A'5: G1641 (Kraton Performance Polymers Inc. made, Hyvinyl hydrogenated block copolymer SEBS, styrene monomer unit content: 32% by mass. Mw: 240,000, Mn:220,000, the ratio of 1,2-bonding in butadiene monomer unit: 67%).

### 2. Block copolymer P and comparison block copolymer P'

- Block copolymer P1: RP6935 (Kraton Performance Polymers Inc. made, Hydrogenated block copolymer multiblock SEBS, styrene monomer unit content:58%, Mw:270,000, Mn:250,000).
- Comparison block copolymer P'1: RP6936 (Kraton Performance Polymers Inc., made, Hydrogenated block copolymer, multiblock SEBS, styrene monomer unit content: 39%, Mw: 150,000, Mn: 140,000.

The molecular weight was measured by GPC under the conditions described as follows..
- Pump: JASCO (JASCO Corporation made, PU-980).
- Column Oven: Showa Denko K.K. made, AO-50
- Detector: Hitachi Ltd. made, RI detector (Differential refractometer L-3300)
- Colum type: Showa Denko K.K. made, "K-805L (8.0×300mm)" and "K-804L (8.0×300mm)" Said columns were connected to each other in series.
- Column temperature: 40°C
- Guard column: K-G (4.6×10mm)
- Eluting solution: Chloroform.
- Flow rate of eluting solution: 1.0ml/min
- Sample solution concentration: about 1mg/ml.
- Filtration of sample solution : Disposable filter made of polytetrafluoroethylene, pore size: 0.45µm.
- Standard sample to make calibration curve: Showa Denko K.K. made, Polystyrene.

### 3. Softening agent B and comparison softening agent B'

- Softening agent B1: Kaydol (Sonneborn Refined Products B. V. made, Oil, kinematic viscosity at 40°C: 64 to 70 cSt).
- Softening agent B'1: Markhor N172 (Exson Mobile Corporation made, Oil, kinematic viscosity at 40°C:33 cSt).

### 4. Propylene polymer C and comparison olefin polymers C'

- Propylene polymer C1: PM600A (SunAllomer Ltd. made, Polypropylene: modulus in bending: 1600MPa, MFR (melt flow-rate): 75g/10min).
- Comparison olefin polymer C'1: PH 943B (SunAllomer Co., Ltd. made, Propylene polymer: modulus in bending: 550 MPa, MFR (melt flow rate): 21g/10min).
- Comparison olefin polymer C'2: J5900 (Prime Polymer Co., Ltd. made, Polypropylene, modulus in bending: 420MPa MFR (melt flow rate): 8g/10min).
- Comparison olefin polymer C'3: Nipolon Hard 1000 (Tosoh Corp. made, HDPE (high density polyethylene), modulus in bending: 1160MPa, MFR (melt flow rate): 20g/10min, density: 964 kg/m²)
Herein, MFR (melt flow rate) was measured according to JIS K 7210, under the conditions 230°C, load 2.16kg(21, 2N).

### 5. Thermoplastic resin as optional component.

- Other block copolymer D1: G1641 (Kraton Performance Polymers Inc. made, Hyvinyl hydrogenated block copolymer SEBS, styrene monomer unit content: 32%, Mw: 240,000, Mn: 220,000, the ratio of 1.2 bonding in butadiene monomer unit: 67%).

G1641 is the same polymer as the Comparison block copolymer A'5, however, in a case where G1641 is used as an optional component, G1641 is called D1 as a matter of convenience.

### (Preparation of the elastomer composite)

The elastomer composite samples of the present invention and the comparison elastomer composite samples were prepared using the aforementioned raw materials. The ratios (parts by mass) of the combinations of said samples are shown in Tables 1 and 2 (samples of the present invention), and Tables 3 and 4 (comparison samples).

Solid raw materials (components with the exception of softening agent B and comparison softening agent B') were mixed together (dry blending) to prepare a mixture of solid raw materials, after which liquid raw material (softening agent B or softening agent B') was added to said mixture to mix and impregnate said liquid raw material into said mixture of solid raw material, thus preparing a raw material mixture. The resulting raw material mixture was then melted and kneaded in an extruding machine to prepare pellets of each sample.
- Extruding machine: TECHNOVEL CORPORATION made, KZW32TW-60MG-NH
- Cylinder temperature: 250 to 300°C (the appropriate temperature was selected for each sample in the range of between 250 and 300°C).
- Number of revolutions of the screw: 300rpm

### (Preparing of the molded article)

The pellets of said samples were molded by injection molding, to prepare plate-shaped molded article samples and bar-shaped molded article samples.

The size of each plate-shaped sample was as follows;
length: 125mm, width: 125mm, thickness: 2mm.

The size of each bar-shaped sample was as follows;
length: 125mm, width: 25mm, thickness: 6mm.
Column-shaped samples were then prepared by the punch processing of said bar-shaped samples. The diameter of the resulting column-shaped sample was 20mm, and its thickness was 6mm.

Said column shaped samples were used for evaluation as the plug.
- Injection molding machine: Mitsubishi Heavy Industries, Ltd. made, 100MSIII-10E
- Molding temperature: 170°C
- Injection molding pressure: 30% of the maximum ability of the injection molding machine 100MSIII-10E (Real pressure: about 600kgf/cm²)
- Injection time: 10 seconds
- Mold temperature: 40°C

### (Evaluation)

Evaluations of said column shaped samples as plugs described as follows were performed respectively.

The results of the evaluations of said samples are shown in Tables 1 and 2 (samples of the present invention) and Tables 3 and 4 (comparison samples).

### (A-hardness)

Three molded samples (thickness 2mm each) were piled (total thickness 6mm) and the A-hardness of said piled samples were measured according to JIS K6253 (measurement time one second, namely the measured value one second after the start of the test). The measurements were carried out on samples kept in a chamber at a temperature of 23°C, with a humidity of 50% for one day. A preferable A-hardness is 30to 50.

### (Heat resistance (heat sterilization test))

Said column-shaped samples were kept in an oven at 110°C for 30 minutes for heat sterilization treatment. The resulting samples were then checked by visual inspection as to whether said samples had deformation or not.
O: No deformation was recognized
X: Deformation was recognized

### (Liquid leakage resistance 1 (plastic needle inserting test))

A liquid leaking resistance test machine consisting of a liquid tank and a plug setting means arranged on the bottom of said liquid tank was used to estimate the liquid leakage resistance. Said sample plug (column shaped molded article) was set into said plug setting means of said liquid leakage resistance test machine, and 500ml of water was poured into said liquid tank, to effect 0.01Mpa of water pressure onto the surface of said sample plug.

This estimation was performed in a chamber at a temperature of 23°C, and humidity of 50%.

A medical plastic needle (TERUMO CORP. made, TC-00503 K) was vertically inserted into the center of each sample plug from the bottom of said sample plug to stand for 2 hours.

The perforated hole of said needle itself was sealed to prevent leakage of water from said hole.

After 2 hours, said needle was pulled out of said sample plug, and the amount of water, that had leaked from the needle hole of said sample plug one hour after said needle was pulled out, was judged visually. Twenty sample plugs were used in this estimation.
O: No oozing or leakage was recognized.
Δ: Oozing was recognized, but no leakage was recognized.
X: Leakage was recognized.

### (Liquid leakage resistance 2 (Repeated injection test))

A liquid leakage resistance test machine consisting of a liquid tank and a plug setting means arranged on the bottom of said liquid tank was used to estimate the liquid leakage resistance. Said sample plug (column shaped molded article) was set into said plug setting means of said liquid leakage resistance test machine, and 500ml of water was poured into said liquid tank, to effect 0.01Mpa of water pressure onto the surface of said sample plug. This estimation was performed in a chamber at a temperature of 23°C, and humidity of 50%.

A medical metal needle (TERUMO CORP. made, 18G) attached to an injector was vertically inserted at the center of each sample plug from the bottom of said sample plug, and said needle attached to said injector was inclined at an angle of about 30° to said sample plug, then after 15 seconds, said needle was pulled out of said sample plug, maintaining its 30° inclination.

Said insertion and pulling into/out of said sample plug was repeated again. In the second time test, the same needle and the same injector were used, and said needle was inserted at the same place on said sample plug. After said needle was pulled out of said sample plug in the second test, said sample plug was kept for one hour, after which the water leakage from the needle hole of said sample plug was judged visually. Twenty sample plugs were used for the estimation.
O: No oozing or leakage was recognized.
Δ: Oozing was recognized, but no leakage was recognized.
X: Leakage was recognized.

### (Needle holding property (hanging test with loading))

Said sample plugs (column shaped samples) were set on a test table so that each sample plug plane was set to be parallel to the horizontal plane. The estimation was performed in a chamber at a temperature of 23°C, and humidity of 50%.

A medical metal needle (TERUMO CORP. made, TC-00501K), to which a weight of 500g was attached, was vertically inserted into the center of each sample plug from the bottom of said sample plug, and the time from the needle insertion to the needle coming out (needle holding time (seconds)) was determined. The needle holding time is preferably 100 seconds or more, but more preferably 120 seconds or more.

**Table 1**

| | | | Example 1 | Example 2 | Example 3 | Example 4 | Example 5 | Example 6 |
|---|---|---|---|---|---|---|---|---|
| Raw mate -rial | Block copolymer A | A1 | 90 | 90 | 70 | 90 | 89 | 83 |
| | Comparison block copolymer A' | A' 1 | | | | | | |
| | | A' 2 | | | | | | |
| | | A' 3 | | | | | | |
| | | A' 4 | | | | | | |
| | | A' 5 | | | | | | |
| | Block copolymer P | P1 | 10 | 10 | 30 | 10 | 11 | 17 |
| | Comparison block copolymer P' | P' 1 | | | | | | |
| | Softening agent B | B1 | 180 | 130 | 180 | 250 | 200 | 300 |
| | Comparison softening agent B' | B' 1 | | | | | | |
| | Propylene polymer C | C1 | 20 | 20 | 20 | 30 | 22 | 33 |
| | Comparison olefin polymer C' | C' 1 | | | | | | |
| | | C' 2 | | | | | | |
| | | C' 3 | | | | | | |
| | Optional thermoplastic resin | D1 | | | | | 11 | 67 |
| Evaluation | A Hardness | | 33 | 45 | 35 | 37 | 32 | 30 |
| | Heat resistance (heat strilization test) | | ○ | ○ | ○ | ○ | ○ | ○ |
| | Liquid leakage resistance 1*1 (Plastic needle inserting test) | ○ | 20 | 20 | 20 | 20 | 20 | 18 |
| | | Δ | 0 | 0 | 0 | 0 | 0 | 2 |
| | | × | 0 | 0 | 0 | 0 | 0 | 0 |
| | Liquid leakage resistance 2*1 (Repeated injection test) | ○ | 20 | 20 | 20 | 20 | 20 | 16 |
| | | Δ | 0 | 0 | 0 | 0 | 0 | 4 |
| | | × | 0 | 0 | 0 | 0 | 0 | 0 |
| | Needle holding property (hanging test with holding) | | 132 | 250 | 410 | 106 | 600m ore | 350 |

| | | | | | | | | |
|---|---|---|---|---|---|---|---|---|
| * 1 The number of the test samples estimated as ○ , Δ , or × in 20 samples | | | | | | | | |

**Table 2**

| | | | Example 7 | Example 8 | Example 9 |
|---|---|---|---|---|---|
| Material | Block copolymer A | A2 | 90 | 70 | 89 |
| | Comparison block copolymer A' | A' 1 | | | |
| | | A' 2 | | | |
| | | A' 3 | | | |
| | | A' 4 | | | |
| | | A' 5 | | | |
| | Block copolymer P | P1 | 10 | 30 | 11 |
| | C om parison bbck copolymer P' | P' 1 | | | |
| | Softening agent B | B1 | 180 | 180 | 180 |
| | Comparison softening agent B' | B' 1 | | | |
| | Propylene polymer C | C1 | 20 | 20 | 20 |
| | Comparison olefin polymer C' | C' 1 | | | |
| | | C' 2 | | | |
| | | C' 3 | | | |
| | Optional thermoplastic resin | D1 | | | 11 |
| Evaluation | A Hardness | | 34 | 35 | 33 |
| | Heat resistance (heat stererization test) | | ○ | ○ | ○ |
| | Liquid leakage resistance 1 *1 (Plastic needle inserting test) | ○ | 20 | 20 | 20 |
| | | Δ | 0 | 0 | 0 |
| | | × | 0 | 0 | 0 |
| | Liquid leakage resistance 2 *1 (Repeated injection test) | ○ | 20 | 20 | 20 |
| | | Δ | 0 | 0 | 0 |
| | | × | 0 | 0 | 0 |
| | Needle holding property (hanging test with holding) | | 146 | 428 | 520 |

| | | | | | |
|---|---|---|---|---|---|
| * 1 The number of the test samples estimated as ○, Δ , or × in 20 samples | | | | | |

**Table 3**

| | | | Comparison 1 | Comparison 2 | Comparison 3 | Comparison 4 | Comparison 5 | Comparison 6 | Comparison 7 | Comparison 8 | Comparison 9 | Comparison 10 |
|---|---|---|---|---|---|---|---|---|---|---|---|---|
| Material | Block copolymer A | A1 | 100 | 90 | 90 | 90 | | | | | | 90 |
| | Comparison block copolymer A' | A' 1 | | | | | 90 | | | | | |
| | | A' 2 | | | | | | 90 | | | | |
| | | A' 3 | | | | | | | 90 | | | |
| | | A' 4 | | | | | | | | 90 | | |
| | | A' 5 | | | | | | | | | 90 | |
| | Block copolymer P | P1 | | 10 | 10 | 10 | 10 | 10 | 10 | 10 | 10 | 10 |
| | Comparison block copolymer P' | P' 1 | | | | | | | | | | |
| | Softening agent B | B 1 | 180 | 80 | 320 | 180 | 180 | 180 | 180 | 180 | 180 | |
| | Comparison softening agent B' | B' 1 | | | | | | | | | | 180 |
| | Propylene polymer C | C1 | 20 | 20 | 20 | 60 | 20 | 20 | 20 | 20 | 20 | 20 |
| | Comparison olefin polymer C' | C' 1 | | | | | | | | | | |
| | | C' 2 | | | | | | | | | | |
| | | C' 3 | | | | | | | | | | |
| | Optional thermoplastic resin | D1 | | | | | | | | | | |
| Evaluation | A Hardness | | 32 | 55 | 15 | 60 | 30 | 34 | 33 | 32 | 28 | 32 |
| | Heat resistance (heat sterilization test) | | ○ | ○ | ○ | ○ | × | ○ | ○ | ○ | ○ | ○ |
| | Liquid leakage resistance 1 *1 (Plastic needle inserting test) | ○ | 18 | 0 | 13 | 0 | *2 | 20 | 4 | 3 | 14 | 10 |
| | | Δ | 2 | 5 | 7 | 2 | | 0 | 5 | 8 | 6 | 6 |
| | | × | 0 | 15 | 0 | 18 | | 0 | 11 | 9 | 0 | 4 |
| | Liquid leakage resistance 2 *1 (Repeated injection test) | ○ | 19 | 0 | 12 | 0 | | 13 | 3 | 5 | 13 | 9 |
| | | Δ | 1 | 2 | 8 | 1 | | 7 | 8 | 4 | 7 | 8 |
| | | × | 0 | 18 | 0 | 19 | | 0 | 9 | 11 | 0 | 3 |
| | Needle holding property (hanging test with holdin | | 40 | 600 more | 6 | 600 more | | 87 | 124 | 132 | 73 | 62 |

| | | | | | | | | | | | | |
|---|---|---|---|---|---|---|---|---|---|---|---|---|
| * 1 The number of the test samples estimated as ○, Δ , or × in 20 samples * 2 No evaluation was made because of poor heat resistance | | | | | | | | | | | | |

**Table 4**

| | | | Comparison 11 | Comparison 12 | Comparison 13 | Comparison 14 | Comparison 15 |
|---|---|---|---|---|---|---|---|
| Material | Block copolymer A | A1 | 40 | 90 | 90 | 90 | 90 |
| | Comparison block copolymer A' | A' 1 | | | | | |
| | | A' 2 | | | | | |
| | | A' 3 | | | | | |
| | | A' 4 | | | | | |
| | | A' 5 | | | | | |
| | Block copolymer P | P1 | 60 | | 10 | 10 | 10 |
| | Comparison block copolymer P' | P' 1 | | 10 | | | |
| | Softening Agent B | B1 | 180 | 180 | 180 | 180 | 180 |
| | Comparison softening agent B' | B' 1 | | | | | |
| | Propylene polymer C | C1 | 20 | 20 | | | |
| | Comparison olefin polymer C' | C' 1 | | | | 20 | |
| | | C' 2 | | | 20 | | |
| | | C' 3 | | | | | 20 |
| | Optional thermoplstic resin | D1 | | | | | |
| Evaluation | A Hardness | | 37 | 34 | 26 | 27 | 25 |
| | Heat resistance (hear stererization test) | | ○ | × | ○ | ○ | ○ |
| | Liquid leakage resistance 1*1 (Plastice needle inserting test) | ○ | 15 | *2 | 6 | 10 | 10 |
| | | Δ | 4 | | 8 | 7 | 5 |
| | | × | 1 | | 6 | 3 | 5 |
| | Liquid leakage resistance 2*1 (Repeated injection test) | ○ | 11 | | 4 | 8 | 8 |
| | | Δ | 7 | | 10 | 9 | 4 |
| | | × | 2 | | 6 | 3 | 8 |
| | Needle holding property (hanging test with holding) | | 600 more | | 42 | 52 | 30 |

| | | | | | | | |
|---|---|---|---|---|---|---|---|
| * 1 The number of the test samples estimated as ○, Δ , or × in 20 samples * 2 No evaluation was made because of poor heat resistance | | | | | | | |

Comparison 1 relates to an elastomer composite containing no block copolymer P, and has an inferior needle holding property.
Comparison 2 relates to an elastomer composite containing said softening agent B in an insufficient ratio, and has extremely inferior liquid leakage resistance.
Comparison 3 relates to an elastomer composite containing said softening agent B in an excessive ratio, and has an extremely inferior needle holding property and further has inferior liquid leakage resistance.
Comparison 4 relates to an elastomer composite containing said propylene polymer C in an excessive ratio, and has extremely inferior liquid leakage resistance.
Comparison 5 relates to an elastomer composite into which comparison block copolymer A' having a low Mw is blended instead of said block copolymer A, and has inferior heat resistance.
Comparison 6 relates to an elastomer composite into which comparison block copolymer A' having a high Mw is blended instead of said block copolymer A, and has an inferior needle holding property, and inferior liquid leakage resistance 2 (Repeated injection test).
Comparisons 7 and 8 relate to an elastomer composite into which SEPS or SEEPS is blended instead of said bloc copolymer A, and has inferior liquid leakage resistance.
Comparison 9 relates to an elastomer composite into which Hyvinyl SEBS is blended instead of said block copolymer A, and has inferior liquid leakage resistance and an inferior needle holding property.
Comparison 10 relates to an elastomer composite into which a comparison softening agent having a low-kinematic viscosity is blended instead of said softening agent B, and has inferior liquid leakage resistance and an inferior needle holding property.
Comparison 11 relates to an elastomer composite in which the ratio of said block copolymer A and said block copolymer P is out of the scope limited in claims, and has slightly inferior liquid leakage property.
Comparison 12 relates to an elastomer composite into which comparison block copolymer P' having a low Mw is blended instead of said block copolymer P, and has inferior heat resistance.
Comparisons 13 to 15 relate to elastomer composites wherein a comparison olefin polymer is blended in each elastomer composite instead of said propylene polymer C, and have extremely inferior liquid leakage resistance and an extremely inferior needle holding property.

### POSSIBILITY OF INDUSTRIAL USE

Said elastomer composite of the present invention can be molded by a well known method such as injection molding, extrusion molding, press molding or the like. Said molded article prepared using said elastomer composite of the present invention has excellent heat resistance, excellent liquid leakage resistance and an excellent needle holding property, which are all important characteristics required for the plug of a medical vessel, so that said molded article can be preferably used as the plug of a medical vessel such as an infusion bag.

## Claims

1. An elastomer composite suitable as the material for the plug of a medical vessel comprising;
100 parts by mass of a block copolymer mixture containing 50 to 95 parts by mass of a block copolymer A, and 5 to 50 parts by mass of a block copolymer P, with the total of said block copolymer A and said block copolymer P being 100 part by mass,
120 to 300 parts by mass of a softening agent having a kinematic viscosity in the range of between 50 and 500 cSt, at 40°C,
1 to 50 parts by mass of a propylene polymer C having a modulus in bending in the range of between 1000 and 3000MPa,
wherein said block copolymer A is a hydrogenated polymer of a block copolymer Z1 having a polymer block Y1, and two polymer blocks X1 each combining to both ends of said polymer block Y1, said polymer block Y1 containing a butadiene monomer unit as its main constitutional unit, and a ratio of 1, 2-bonding in said butadiene monomer unit being in the range of between 10 and 50%, with each polymer block X1 containing a styrene monomer unit as its main constitutional unit, the weight-average molecular weight of said block copolymer A being in the range of between 160,000 and 400,000, said block copolymer A being a block copolymer containing 20 to 50% by mass of a styrene monomer unit, and said block copolymer P is a hydrogenated polymer of a block copolymer Z2 having a butadiene-styrene controlled distribution copolymer block Y2, and two polystyrene blocks X2 each combining to both ends of said copolymer block Y2, with the weight average molecular weight of said block copolymer P being in the range of between 160,000 and 400,000, said block copolymer P being a block copolymer containing 40 to 70% by mass of a styrene monomer unit, and further, said butadiene-styrene controlled distribution copolymer block Y2 comprising more than two domains YB2 containing a butadiene monomer unit as its main constitutional unit, and at least one domain YS2 containing a styrene monomer unit as its main constitutional unit, with both ends of said copolymer block Y2 being said domains YB2.

2. An elastomer composite suitable as the material for the plug of the medical vessel in accordance with claim 1, wherein said propylene polymer C is a polypropylene.

3. An elastomer composite suitable as the material for the plug of the medical vessel in accordance with claim 1 or 2, wherein the A-hardness of said elastomer composite is in the range of between 30 and 50, said A-hardness being measured according to JIS K6253, the measuring time being set at one second.

## Patentansprüche

1. Eine Elastomerzusammensetzung, die sich als Material für den Verschluss eines medizinischen Behälters eignet, umfassend:
100 Massenteile eines Gemischs aus Blockcopolymeren, das 50 bis 95 Massenteile eines Blockcopolymers A und 5 bis 50 Massenteile eines Blockcopolymers P enthält, wobei die Gesamtheit des Blockcopolymers A und des Blockcopolymers P 100 Massenteile beträgt, 120 bis 300 Massenteile eines Weichmachers, der eine kinematische Viskosität im Bereich zwischen 50 und 500 cSt bei 40°C aufweist,
1 bis 50 Massenteile eines Propylenpolymers C, das einen Biegemodul im Bereich zwischen 1000 und 3000 MPa aufweist,
wobei das Blockcopolymer A ein hydriertes Polymer eines Blockcopolymers Z1 ist, das einen Polymerblock Y1 aufweist und zwei Polymerblöcke X1, die jeweils mit beiden Enden des Polymerblocks Y1 kombinieren, wobei der Polymerblock Y1 eine Butadienmonomereinheit als seine Hauptaufbaueinheit aufweist und wobei ein Anteil von 1, 2-Bindung in der Butadienmonomereinheit im Bereich zwischen 10 und 50% liegt, wobei jeder Polymerblock X1 eine Styrolmonomereinheit als Hauptaufbaueinheit aufweist, wobei das Gewichtsmittel des Molekulargewichts des Blockcopolymers A im Bereich zwischen 160.000 und 400.000 liegt, wobei das Blockcopolymer A ein Blockcopolymer ist, das 20 bis 50 Gew.-% einer Styrolmonomereinheit enthält, und wobei das Blockcopolymer P ein hydriertes Polymer eines Blockcopolymers Z2 ist, das einen Copolymerblock Y2 mit einer kontrollierten Butadien-Styrol-Verteilung aufweist, und zwei Polystyrolblöcke X2, die jeweils mit beiden Enden des Copolymerblocks Y2 kombinieren, wobei das Gewichtsmittel des Molekulargewichts des Blockcopolymers P im Bereich zwischen 160.000 und 400.000 liegt, wobei das Blockcopolymer P ein Blockcopolymer ist, das 40 bis 70 Gew.-% einer Styrolmonomereinheit enthält, und darüber hinaus, wobei der Copolymerblock Y2 mit einer kontrollierten Butadien-Styrol-Verteilung mehr als zwei Domänen YB2 umfasst, die eine Butadienmonomereinheit als Hauptaufbaueinheit enthalten, mindestens eine Domäne YS2, die eine Styrolmonomereinheit als Hauptaufbaueinheit enthält, wobei beide Enden des Copolymerblocks Y2 die Domänen YB2 sind.

2. Eine Elastomerzusammensetzung, die sich als Material für den Verschluss des medizinischen Behälters gemäß Anspruch 1 eignet, wobei das Propylenpolymer C ein Polypropylen ist.

3. Eine Elastomerzusammensetzung, die sich als Material für den Verschluss des medizinischen Behälters gemäß Anspruch 1 oder 2 eignet, wobei die A-Härte der Elastomerzusammensetzung im Bereich zwischen 30 und 50 liegt, wobei die A-Härte gemäß JIS K6253 gemessen wird, wobei die Messzeit auf eine Sekunde eingestellt wird.

## Revendications

1. Composite élastomère convenant à titre de matériau de bouchon pour récipient à usage médical comprenant :
100 parties en poids d'un mélange de copolymères séquencés contenant de 50 à 95 parties en poids d'un copolymère séquencé A, et de 5 à 50 parties en poids d'un copolymère séquencé P, le total dudit copolymère séquencé A et dudit copolymère séquencé P étant de 100 parties en poids,
de 120 à 300 parties en poids d'un agent amollissant ayant une viscosité cinématique dans la plage comprise entre 50 et 500 cSt, à 40 °C,
de 1 à 50 parties en poids d'un polymère de propylène C ayant un module en flexion dans la plage comprise entre 1 000 et 3 000 MPa,
dans lequel ledit copolymère séquencé A est un polymère hydrogéné constitué d'un copolymère séquencé Z1 comportant une séquence polymère Y1, et deux séquences polymères X1 se combinant chacune aux deux extrémités de ladite séquence polymère Y1, ladite séquence polymère Y1 contenant un motif monomère de butadiène à titre de motif constitutionnel principal, et un taux de liaisons 1, 2 dans ledit motif monomère de butadiène étant dans la plage comprise entre 10 et 50 %, chaque séquence polymère X1 contenant un motif monomère de styrène à titre de motif constitutionnel principal, le poids moléculaire moyen en poids dudit copolymère séquencé A étant dans la plage comprise entre 160 000 et 400 000, ledit copolymère séquencé A étant un copolymère séquencé contenant de 20 à 50 % en poids d'un motif monomère de styrène, et dans lequel ledit copolymère séquencé P est un polymère hydrogéné constitué d'un copolymère séquencé Z2 comportant une séquence copolymère Y2 à distribution butadiène-styrène contrôlée, et deux séquences polystyrène X2 se combinant chacune aux deux extrémités de ladite séquence copolymère Y2, le poids moléculaire moyen en poids dudit copolymère séquencé P étant dans la plage comprise entre 160 000 et 400 000, ledit copolymère séquencé P étant un copolymère séquencé contenant de 40 à 70 % en poids d'un motif monomère de styrène, et en outre, ladite séquence copolymère Y2 à distribution butadiène-styrène contrôlée comprenant plus de deux domaines YB2 contenant un motif monomère de butadiène à titre de motif constitutionnel principal, et au moins un domaine YS2 contenant un motif monomère de styrène à titre de motif constitutionnel principal, les deux extrémités de ladite séquence copolymère Y2 étant lesdits domaines YB2.

2. Composite élastomère convenant à titre de matériau de bouchon pour le récipient à usage médical selon la revendication 1, dans lequel ledit polymère de propylène C est un polypropylène.

3. Composite élastomère convenant à titre de matériau de bouchon pour le récipient à usage médical selon la revendication 1 ou 2, dans lequel la dureté A dudit composite élastomère, mesurée selon JIS K6253, est dans la plage comprise entre 30 et 50, le temps de mesure étant fixé à une seconde.
